# EUROPEAN PATENT APPLICATION

(11) **EP 2 628 917 A1**
(43) Date of publication of application: **21.08.2013**
(21) Application number: 11832389.8
(22) Date of filing: 21.09.2011
(51) Int. Cl.: F02B 23/08, F02F 3/26, F02P 5/15, F02P 13/00

(54) **INTAKE PORT FUEL INJECTION ENGINE**

(30) Priority: 15.10.2010 JP 2010232652
(71) Applicant: Mitsubishi Jidosha Kogyo Kabushiki Kaisha, Tokyo 108-8410 (JP)
(72) Inventor: HATA, Koji, Tokyo 108-8410 (JP); TANAKA, Dai, Tokyo 108-8410 (JP)
(74) Representative: Vossius & Partner
(86) International application number: PCT/JP2011/071461
(87) International publication number: WO 2012/049951

(57) **Abstract**

In an engine having an intake stroke injection mode for injecting fuel from a fuel injection valve arranged in an intake passage toward a combustion chamber while an intake valve is open, a piston 30 has a protuberance 34 formed on a top surface thereof. The protuberance protrudes upward, extends transversely across the flowing direction of intake air, and is located in a position offset forward with respect to the flowing direction of the intake air. A cavity 32 is formed in the protuberance 34 so as to be located forward with respect to the flowing direction of the intake air, and a spark plug 6 is arranged such that an electrode 6a thereof faces the cavity 32.

## Description

### Technical Field

The present invention relates to engines configured to inject fuel into intake ports, and more particularly, to an engine in which fuel is injected while intake valves are open.

### Background Art

As intake port fuel injection engines configured to inject fuel from fuel injection valves arranged in intake ports, an engine has been developed which is operable in an intake stroke injection mode for injecting fuel while intake valves are open.
In such an engine having the intake stroke injection mode, fuel is injected while the exhaust valves are closed and at the same time the intake valves are open, whereby discharge of fuel into the exhaust passage can be suppressed. Also, even though the fuel injection valves are arranged in the intake ports, fuel can be supplied to the interior of the combustion chamber with proper timing and accuracy, making it possible to improve engine output and fuel efficiency, like cylinder fuel injection engines.

Meanwhile, when the engine is started in a cold state, the temperature of an exhaust gas-purifying catalytic converter arranged in the exhaust passage needs to be raised early for activation, in order to secure required exhaust gas purification performance. To increase the temperature of the exhaust gas-purifying catalytic converter, a method of retarding the ignition timing and thereby raising the exhaust gas temperature is effective, but this method is associated with a problem that combustion becomes unstable. Thus, the amount of fuel injection has to be increased in order to stabilize combustion, in which case, however, the fuel efficiency lowers and the exhaust gas purification performance possibly remains low until the exhaust gas-purifying catalytic converter is activated.

As a method of stabilizing combustion, a technique has been known in which a cavity is formed in the top surface of the piston to produce a tumble flow within the combustion chamber (see Patent Document 1). A tumble flow created in the combustion chamber makes it easier for flames to propagate inside the combustion chamber, thus promoting combustion.

### Prior Art Documents

### Patent Documents

Patent Document 1: Japanese Laid-open Patent Publication No. S63-48922

### Summary of the Invention

### Problems to be Solved by the Invention

In the case of the engine having the intake stroke injection mode, however, even if an attempt is made to produce a tumble flow within the combustion chamber as in Patent Document 1, the flow of intake air from an upper region of the opening of the intake valve and the flow of intake air from a lower region of the opening collide with each other inside the combustion chamber, with the result that the air-fuel mixture is stirred up. Thus, unlike the cylinder fuel injection engine, it is difficult to realize stratified combustion, making it difficult to achieve both combustion stability and improved fuel efficiency at the time of cold start.

The present invention was made to solve the above problem, and an object thereof is to provide an intake port fuel injection engine which enables stratified combustion to take place inside a combustion chamber, thereby improving fuel efficiency and ensuring combustion stability.

### Means for Solving the Problems

To achieve the above object, the invention as recited in claim 1 provides an intake port fuel injection engine in which fuel is injected from a fuel injection valve arranged in an intake port, along a flowing direction of intake air toward either one of intake and exhaust sides of a combustion chamber while an intake valve is open, wherein a piston has a protuberance formed on a top surface thereof, the protuberance extends toward an outer edge of the piston and protrudes upward to divide an interior of the combustion chamber into a first space located forward with respect to a fuel injection direction and a second space located backward with respect to the fuel injection direction, and the protuberance is arranged such that the first space is larger than the second space and that an electrode of a spark plug faces the first space.

In the invention as recited in claim 2, the fuel injection valve is arranged such that fuel is injected toward either one of those regions of an annular opening defined between the intake valve and the intake port which face the intake and exhaust sides, respectively, of the combustion chamber.
In the invention as recited in claim 3, the top surface of the piston is provided with a roundabout flow restrainer configured to restrain the intake air from flowing from the first space to the second space around opposite ends of the protuberance.
In the invention as recited in claim 4, a cavity is formed in the top surface of the piston as the first space and located forwarder than the protuberance with respect to the fuel injection direction.

In the invention as recited in claim 5, the protuberance constitutes an edge portion of the cavity located backward with respect to the fuel injection direction.
In the invention as recited in claim 6, the engine further comprises: an exhaust gas-purifying catalytic converter arranged in an exhaust passage of the engine; and an ignition timing control unit configured to retard ignition timing of the spark plug during cold start.

### Advantageous Effects of the Invention

According to the invention of claim 1, as fuel is injected from the fuel injection valve while the intake valve is open, intake air flows into the first space in the combustion chamber located forward with respect to the flowing direction of the intake air, while forming an air-fuel mixture rich in fuel. Since the first space is larger than the second space, the air-fuel mixture with high fuel concentration stays in the first space.
By igniting the air-fuel mixture with the spark plug while the mixture stays in the first space, it is possible to ensure satisfactory ignitability while restraining the overall fuel consumption in the combustion chamber, because the fuel concentration is relatively high in the first space, which the electrode of the spark plug faces, and is relatively low in the second space. Stratified combustion therefore occurs, making it possible to improve fuel efficiency and ensure satisfactory combustion stability.

According to the invention of claim 2, fuel is injected toward either one of those regions of the annular opening defined between the intake valve and the intake port which face the intake and exhaust sides, respectively, of the combustion chamber. An air-fuel mixture with high fuel concentration can be made to flow into either one of the intake and exhaust sides of the combustion chamber.
According to the invention of claim 3, the roundabout flow restrainer restrains the intake air from flowing from the first space to the second space around the opposite ends of the protuberance. Thus, even though the intake air is introduced from the intake port subsequently to the fuel injection, the air-fuel mixture with high fuel concentration introduced into the first space can stay in the first space, without being pushed out into the second space.
According to the invention of claim 4, a cavity is formed as the first space in the top surface of the piston, whereby the air-fuel mixture with high fuel concentration can be made to stay more reliably in the first space which the electrode of the spark plug faces.

According to the invention of claim 5, the protuberance constitutes that edge portion of the cavity which is located backward with respect to the fuel injection direction. The air-fuel mixture introduced into the first space is obstructed by the protuberance and turns back within the cavity, so that the air-fuel mixture with high fuel concentration can be caused to stay more reliably in the first space which the electrode of the spark plug faces.
According to the invention of claim 6, even if the ignition timing of the spark plug is retarded at the time of cold start, satisfactory combustion stability is ensured by virtue of the shape of the piston recited in claim 1.
It is therefore possible to raise the exhaust gas temperature by retarding the ignition timing and thereby to quickly increase the temperature of the exhaust gas-purifying catalytic converter, whereby the exhaust gas purification performance at the time of cold start can be improved.

### Brief Description of the Drawings

FIG. 1 is a sectional view schematically showing the internal structure of an engine according to the present invention.
FIG. 2A is a front view showing the shape of a piston.
FIG. 2B is a top view showing the shape of the piston.
FIG. 2C is a right side view showing the shape of the piston.
FIG. 2D is a sectional view showing the shape of the piston.
FIG. 3 illustrates the manner of how an air-fuel mixture flows inside a combustion chamber.

### Mode for Carrying out the Invention

An embodiment of the present invention will be described below with reference to the drawings.

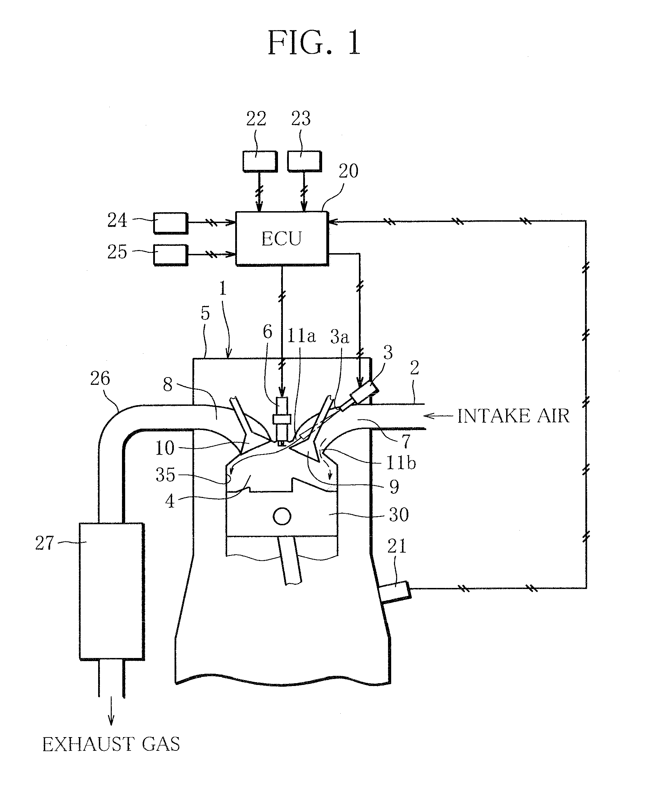

FIG. 1 is a sectional view schematically illustrating the internal structure of an intake port fuel injection engine (hereinafter referred to as engine 1) according to the present invention.
As illustrated in FIG. 1, the engine 1 according to the embodiment of the present invention is an engine having an intake stroke injection mode for injecting fuel from a fuel injection valve 3, which is arranged in an intake passage 2, toward a combustion chamber 4.

A spark plug 6 is arranged in an approximately central portion of a cylinder head 5 of the engine 1 so as to face the combustion chamber 4. The lower surface of the cylinder head 5 is inclined downward on both sides of an approximately central ridge-like line, thus defining a pent roof shape of the combustion chamber 4. An intake port 7 opens in one inclined surface forming the lower surface of the cylinder head 5, and an exhaust port 8 opens in the other inclined surface. An intake valve 9 is arranged in the intake port 7, and an exhaust valve 10 is arranged in the exhaust port 8. The intake and exhaust valves 9 and 10 are driven by a valve actuating mechanism, not shown, arranged above the cylinder head 5, to open and close synchronously with rotation of the crankshaft.

The fuel injection valve 3 is mounted at a mounting angle such that fuel is injected from an injection nozzle 3a thereof along the direction of flow of intake air in the intake port 7 toward an upper region 11a of an annular opening around the intake valve 9. Accordingly, when fuel is injected from the fuel injection valve 3, an air-fuel mixture with high fuel concentration flows into the combustion chamber 4 from the upper region 11a of the opening of the intake valve 9, and intake air with low fuel concentration flows into the combustion chamber 4 from a lower region 11b of the opening of the intake valve 9.

The fuel injection valve 3 is electrically connected to an ECU (Electronic Control Unit) 20. Also, the spark plug 6 is electrically connected to the ECU 20 through an ignition coil. Further, the ECU 20 is electrically connected with various sensors, such as a crank angle sensor 21 for detecting the crank angle of the engine 1, a throttle sensor 22 for detecting the opening of the throttle valve, an accelerator position sensor 23 for detecting an amount by which the accelerator pedal is depressed and a water temperature sensor 24 for detecting the temperature of cooling water, as well as with a key switch 25. Based on the information input from these sensors, the ECU 20 controls the amount of fuel to be injected from the fuel injection valve 3, fuel injection timing, ignition timing of the spark plug 6, and the like.

An exhaust passage 26 of the engine 1 is equipped with an exhaust gas-purifying catalytic converter 27 such as a three-way catalytic converter. The exhaust gas-purifying catalytic converter 27 is activated to exhibit its exhaust gas purification performance when the temperature of catalysts therein is increased.

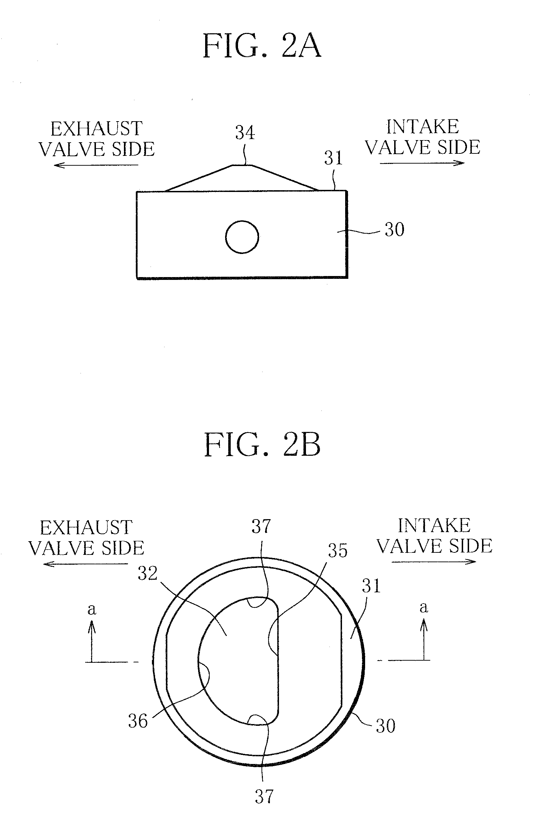

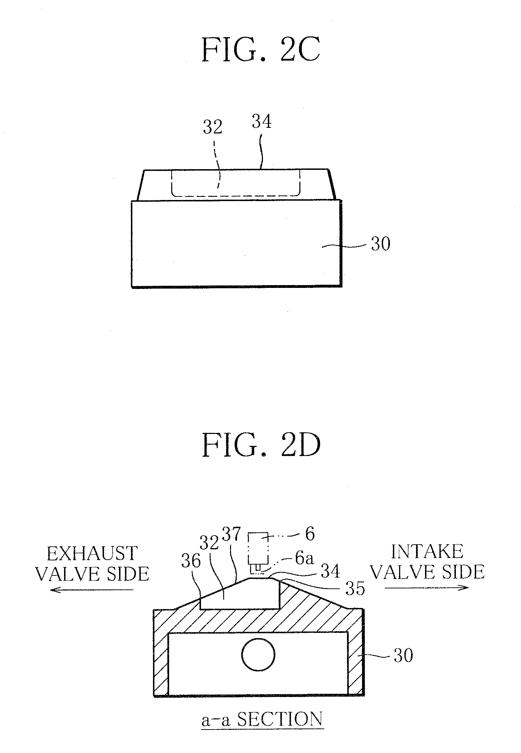

FIGS. 2A to 2D illustrate the shape of a piston 30, wherein FIG. 2A is a front view of the piston, FIG. 2B is a top view of the piston, FIG. 2C is a right side view of the piston, and FIG. 2D is a sectional view of the piston.

As illustrated in FIG. 2A, the piston 30 has a protuberance 34 formed on a top surface 31 thereof, and a central portion of the protuberance 34 gentry protrudes upward as viewed from the front of the piston 30. The top surface 31 of the piston 30 of the engine 1 defines a first space located near the exhaust valve 10 and a second space located near the intake valve 9 with the protuberance 34 serving as a boundary. A semicircular cavity 32 is formed in the first space. As illustrated in FIG. 2B, the cavity 32 is formed in a position offset toward the exhaust valve 10 and adjoins the protuberance 34. Further, as shown in FIG. 2D, the cavity 32 is positioned such that the electrode of the spark plug 6 is located above the cavity 32. Because of the protuberance 34, an edge portion 35 of the cavity 32 which is located close to the intake valve 9 has a greater height than an edge portion 36 which is located close to the exhaust valve 10, as shown in FIG. 2D. Also, the cavity 32 has right and left edge portions 37 (roundabout flow restrainer) continuous with the intake valve-side edge portion 35 and having a height nearly equal to that of the intake valve-side edge portion 35, thus making it difficult for the intake air to flow out to right and left from inside the cavity 32.

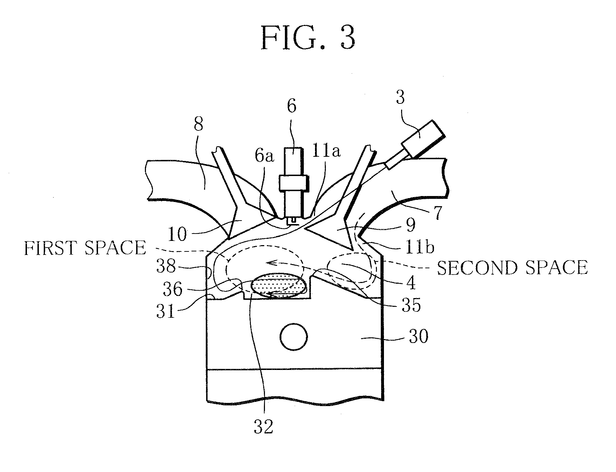

Referring now to FIG. 3, the manner of how the air-fuel mixture flows inside the combustion chamber 4 of the engine 1 equipped with the piston 30 configured as described above will be explained.
FIG. 3 illustrates how the air-fuel mixture flows within the combustion chamber 4. In FIG. 3, the solid arrow indicates the moving direction of the air-fuel mixture with high fuel concentration that has been introduced from the upper region 11a of the opening of the intake valve 9, and the dashed arrow in FIG. 3 indicates the moving direction of the intake air with low fuel concentration that has been introduced from the lower region 11b of the opening of the intake valve 9. Also, in FIG. 3, the shaded portion indicates the position relative to the piston 30 where the air-fuel mixture with high fuel concentration reaches at the time of ignition.

As shown in FIG. 3, fuel injected from the fuel injection valve 3 forms an air-fuel mixture with high fuel concentration and flows from the upper region 11a of the opening of the intake valve 9 into the combustion chamber 4. The air-fuel mixture with high fuel concentration moves in the upper region of the combustion chamber 4 along the lower surface of the cylinder head 5 toward the exhaust valve 10. Subsequently, the air-fuel mixture with high fuel concentration moves downward along a liner 38, then turns back toward the intake valve 9 along the top surface 31 of the piston 30, and reaches the cavity 32.

On the other hand, the intake air with low fuel concentration that has been introduced into the combustion chamber 4 from the lower region 11b of the opening of the intake valve 9 flows downward along the liner 38 on the intake valve side and then moves toward the exhaust valve 10 along the top surface 31 of the piston 30. The intake air with low fuel concentration moves along the upper surface of the piston 30 inclined upward toward the exhaust valve 10 and then passes over the cavity 32 toward the exhaust valve 10.

After reaching the cavity 32, the air-fuel mixture with high fuel concentration still has forward momentum but is prevented from moving toward the intake valve 9 because such movement is obstructed by the high edge portion 35 of the cavity 32 located on the same side as the intake valve 9. Also, the right and left relatively high edge portions 37 of the cavity 32 make it difficult for the air-fuel mixture to flow out to right and left from inside the cavity 32 toward the intake valve side around the protuberance 34.
Accordingly, the air-fuel mixture with high fuel concentration of which the movement toward the intake valve side has been obstructed by the edge portion 35 turns back thereunder also because the intake air with low fuel concentration passes over the cavity 32, with the result that the air-fuel mixture with high fuel concentration stays in the cavity 32 (in the figure, in the position indicated by hatching) while maintaining its tumble flow.

When the piston 30 is in the vicinity of the top dead center where the electrode 6a of the spark plug 6 is located near the cavity 32, the spark plug 6 is caused to ignite the air-fuel mixture. In this case, the air-fuel mixture can be readily ignited because the air-fuel mixture with high fuel concentration stays in the cavity 32, thus ensuring high combustion stability. Also, at the time of ignition, the fuel concentration is low in the other region of the combustion chamber 4 than the interior of the cavity 32, whereby the amount of fuel needed in the combustion chamber 4 as a whole can be reduced, making it possible to improve fuel efficiency.

Thus, according to the embodiment, the piston 30 is so configured as to have the top surface 31 with the aforementioned shape, and therefore, in the engine having the intake stroke injection mode for injecting fuel into the combustion chamber 4 from the opening 11a of the intake valve 9, the air-fuel mixture with high fuel concentration that has been introduced into the combustion chamber 4 can be caused to stay in the cavity 32, enabling stratified combustion to take place easily in the combustion chamber 4. Accordingly, it is possible to improve fuel efficiency while at the same time ensuring satisfactory combustion stability.

The ECU 20 (ignition timing control unit) may be configured to retard the ignition timing when it is judged on basis of the state of the key switch 25 and the information detected by the water temperature sensor 24 and the like that the engine 1 is started in a cold state. Generally, combustion stability lowers if the ignition timing is retarded. The engine 1 according to the embodiment, though it is a port injection engine, can ensure satisfactory combustion stability by virtue of stratified combustion achieved by the intake stroke injection and the aforementioned shape of the top surface 31 of the piston 30, and therefore, the retardation amount can be set to a sufficiently large value. Since a sufficient retardation amount can be set at the time of cold start, the exhaust gas temperature can be quickly raised to expedite activation of the exhaust gas-purifying catalytic converter 27, whereby the exhaust gas purification performance at the time of cold start can be improved.

Also, in the embodiment, the cavity 32 has the edge portion 36 located on the same side as the exhaust valve 10. This edge portion 36 serves to again turn back the air-fuel mixture with high fuel concentration that has been returned from the intake valve side within the cavity 32, enabling the air-fuel mixture to keep a strong tumble flow inside the cavity 32.
Further, in the above embodiment, the intake valve-side edge portion 35 of the cavity 32 may be slanted toward the exhaust valve 10. By slanting the edge portion 35 in this manner, it is possible to make more difficult for the air-fuel mixture with high fuel concentration to flow over the edge portion 35 from inside the cavity 32 toward the intake valve 9, whereby the air-fuel mixture with high fuel concentration can be caused to remain in the cavity 32 more reliably.

In the above embodiment, the mounting angle of the fuel injection valve 3 is set so that the fuel injected from the injection nozzle 3a may be directed to the upper region 11a of the opening of the intake valve 9. The manner of mounting the fuel injection valve 3 is not limited to this and the fuel injection valve 3 may be mounted otherwise. Specifically, the mounting angle of the fuel injection valve 3 may be set in such a manner that the fuel injected from the injection nozzle 3a is directed to the lower region 11b of the opening of the intake valve 9. In this case, the first space and the cavity may be formed so as to be located on the same side as the intake valve 9.
Although in the above embodiment the cavity 32 is formed in the top surface 31 of the piston 30, at least the protuberance 34 needs to be formed, and the cavity 32 may be omitted. Specifically, the protuberance 34 may be formed so as to divide the interior of the combustion chamber 4 into a space located near the exhaust valve 10, that is, located forward with respect to the flowing direction of the intake air, and a space located opposite the first-mentioned space, and may be arranged such that the first-mentioned space which the electrode 6a of the spark plug 6 faces is larger than the opposite space. Also in this case, the air-fuel mixture with high fuel concentration stays in the space located forward with respect to the flowing direction of the intake air, thus enabling stratified combustion to take place.

### Explanation of Reference Signs

- 1:: engine
- 3:: fuel injection valve
- 4:: combustion chamber
- 6:: spark plug
- 20:: ECU
- 26:: exhaust gas-purifying catalytic converter
- 30:: piston
- 32:: cavity
- 34:: protuberance
- 37:: edge portion

## Claims

1. An intake port fuel injection engine in which fuel is injected from a fuel injection valve arranged in an intake port, along a flowing direction of intake air toward either one of intake and exhaust sides of a combustion chamber while an intake valve is open,
**characterized in that**:
a piston has a protuberance formed on a top surface thereof, the protuberance extends toward an outer edge of the piston and protrudes upward to divide an interior of the combustion chamber into a first space located forward with respect to a fuel injection direction and a second space located backward with respect to the fuel injection direction, and
the protuberance is arranged such that the first space is larger than the second space and that an electrode of a spark plug faces the first space.

2. The intake port fuel injection engine according to claim 1, **characterized in that** the fuel injection valve is arranged such that fuel is injected toward either one of those regions of an annular opening defined between the intake valve and the intake port which face the intake and exhaust sides, respectively, of the combustion chamber.

3. The intake port fuel injection engine according to claim 2, **characterized in that** the top surface of the piston is provided with a roundabout flow restrainer configured to restrain the intake air from flowing from the first space to the second space around opposite ends of the protuberance.

4. The intake port fuel injection engine according to claim 3, **characterized in that** a cavity is formed in the top surface of the piston as the first space and located forwarder than the protuberance with respect to the fuel injection direction.

5. The intake port fuel injection engine according to any one of claims 1 to 4, **characterized in that** the protuberance constitutes an edge portion of the cavity located backward with respect to the fuel injection direction.

6. The intake port fuel injection engine according to claim 5, **characterized by** further comprising:
an exhaust gas-purifying catalytic converter arranged in an exhaust passage of the engine; and
an ignition timing control unit configured to retard ignition timing of the spark plug during cold start.

## Amended claims

### Amended claims under Art. 19.1 PCT

**1.** (Amended) An intake port fuel injection engine in which fuel is injected from a fuel injection valve arranged in an intake port, along a direction of flow of intake air from the intake port toward an exhaust side of a combustion chamber while an intake valve is open,
**characterized in that**:
a piston has a protuberance formed on a top surface thereof and protruding upward, and the top surface of the piston has a cavity formed therein, the protuberance which is an edge of the cavity and is extending toward an outer edge of the piston, the protuberance divides an interior of the combustion chamber into an exhaust valve-side first space located forward with respect to a fuel injection direction and an intake valve-side second space located backward with respect to the fuel injection direction,
the first space includes the cavity and is larger than the second space, and an electrode of a spark plug faces the first space.

**2.** (Amended) The intake port fuel injection engine according to claim 1, **characterized in that** the fuel injection valve is arranged such that fuel is injected toward an upper region of an annular opening defined between the intake valve and the intake port, and the upper region of the opening faces the exhaust side of the combustion chamber.

**3.** (Amended) The intake port fuel injection engine according to claim 1 or 2, **characterized in that** the top surface of the piston has an edge portion which restrains the intake air introduced via the intake port from flowing from the first space to the second space around opposite ends of the protuberance.

**4.** (Canceled)

**5.** (Amended) The intake port fuel injection engine according to any one of claims 1 to 3, **characterized in that** the protuberance constitutes an edge portion of the cavity located on the same side as the intake port.

**6.** (Canceled)

**7.** (Added) An intake port fuel injection engine in which fuel is injected from a fuel injection valve arranged in an intake port, along a direction of flow of intake air from the intake port toward an intake side of a combustion chamber while an intake valve is open,
**characterized in that**:
a piston has a protuberance formed on a top surface thereof and protruding upward, and the top surface of the piston has a cavity formed therein, the protuberance which is an edge of the cavity and is extending toward an outer edge of the piston, the protuberance divides an interior of the combustion chamber into an intake valve-side first space located forward with respect to a fuel injection direction and an exhaust valve-side second space located backward with respect to the fuel injection direction,
the first space includes the cavity and is larger than the second space, and an electrode of a spark plug faces the first space.

**8.** (Added) The intake port fuel injection engine according to claim 7, **characterized in that** the fuel injection valve is arranged such that fuel is injected toward a lower region of an annular opening defined between the intake valve and the intake port, and the lower region of the opening faces the intake side of the combustion chamber.

**9.** (Added) The intake port fuel injection engine according to any one of claims 1 to 3, 5, 7 and 8, **characterized by** further comprising:
an exhaust gas-purifying catalytic converter arranged in an exhaust passage of the engine; and
an ignition timing control unit configured to retard ignition timing of the spark plug when the engine is started in a cold state.

**10.** (Added) The intake port fuel injection engine according to any one of claims 1 to 3 and 5, **characterized in that** the edge portion of the cavity located on the same side as the intake valve has a greater height than an edge portion of the cavity located on the same side as the exhaust valve.

Statement under Art. 19.1 PCT
Claim 1 has been amended to specify that fuel injected from the fuel injection valve is directed to the exhaust side of the combustion chamber and that the first and second spaces are respectively on the exhaust and intake valve sides. Also, claim 1 has been limited by incorporating therein the subject matter of claim 4 to make clear that the cavity is included in the first space.

Claim 2 has been amended in conjunction with the amendment to claim 1 now specifying that fuel injected from the fuel injection valve is directed to the exhaust side of the combustion chamber, to specify that fuel is injected toward the upper region of the opening.

Claim 3 has been amended to clarify the roundabout flow restrainer. Also, the dependency has been changed to additionally refer to claim 1.

Claim 4 has been canceled because the subject matter thereof is now incorporated in claim 1.

Claim 5 has been amended to clarify the edge portion located backward.

New claim 7 is based on original claim 1 and specifies that fuel injected from the fuel injection valve is directed to the intake side of the combustion chamber.

New claim 8 is based on original claim 2 and recites subject matter depending on claim 7. Specifically, since claim 7 specifies that fuel injected from the fuel injection valve is directed to the intake side of the combustion chamber, claim 8 specifies that fuel is injected toward the lower region of the opening.

New claim 9 corresponds to original claim 6.

New claim 10 recites the additional feature that the edge portion of the cavity located on the same side as the intake valve has a greater height than the edge portion of the cavity located on the same side as the exhaust valve.

Thus, original claim 1 has been divided into claim 1 specifying that fuel injected from the fuel injection valve is directed to the exhaust side of the combustion chamber and that the first space is on the exhaust valve side, and claim 7 specifying that fuel injected from the fuel injection valve is directed to the intake side of the combustion chamber and that the first space is on the intake valve side.

Since original claim 1 has been divided as stated above, claim 8 based on original claim 2 and depending on claim 7 has been added, aside from claim 2 depending on claim 1. Claim 2 depending on claim 1 now specifies that fuel is injected toward the upper region of the annular opening defined between the intake valve and the intake port, and claim 8 depending on claim 7 specifies that fuel is injected toward the lower region of the annular opening defined between the intake valve and the intake port.

The amendment to claim 2 makes clear that the effect of introducing the air-fuel mixture with high fuel concentration into the exhaust side of the combustion chamber is obtained, and the amendment to claim 8 makes clear that the effect of introducing the air-fuel mixture with high fuel concentration into the intake side of the combustion chamber is obtained. Thus, in both claims 2 and 8, it is clear that the air-fuel mixture with high fuel concentration can be introduced from the intake port into the first space.

Regarding claim 10, the edge portion of the cavity located on the same side as the intake valve is higher than the edge portion of the cavity located on the same side as the exhaust valve, and this makes it more difficult for the air-fuel mixture with high fuel concentration to move from the exhaust valve-side first space to the intake valve-side second space, whereby the air-fuel mixture with high fuel concentration can be caused to stay in the first space.
